(19) Europäisches Patentamt / European Patent Office / Office européen des brevets

(11) EP 0 877 050 B1

(12) EUROPEAN PATENT SPECIFICATION

(45) Date of publication and mention of the grant of the patent: **21.05.2008 Bulletin 2008/21**

(51) Int Cl.: *C08L 23/04* (2006.01) *C08L 101/00* (2006.01)

(21) Application number: **98111773.2**

(22) Date of filing: **15.09.1993**

(54) **Impact modification of thermoplastics**

Schlagzähmodifizierung von Thermoplasktiken

Matières thermoplastiques à resistance modifiée aux chocs

(84) Designated Contracting States: **BE DE ES FR GB IT NL SE**

(30) Priority: **15.09.1992 US 945034**
**08.04.1993 US 45330**

(43) Date of publication of application: **11.11.1998 Bulletin 1998/46**

(62) Document number(s) of the earlier application(s) in accordance with Art. 76 EPC: **93921610.7 / 0 660 859**

(73) Proprietor: **DOW GLOBAL TECHNOLOGIES INC.**
**Midland, Michigan 48674 (US)**

(72) Inventors:
- **Betso, Stephen R.** **8810 Horgen (CH)**
- **Silvis, Craig H.** **Midland, Michigan 48642 (US)**
- **Murray, Daniel J.** **Midland, Michigan 48642 (US)**
- **Fiske, Thomas R.** **Baton Rouge, Louisiana 70806 (US)**
- **Turley, Robert R.** **Lake Jackson, Texas 77566 (US)**

(74) Representative: **Dey, Michael et al**
**Weickmann & Weickmann Patentanwälte Postfach 86 08 20 81635 München (DE)**

(56) References cited:
**EP-A- 0 141 597**

- **DATABASE WPI Section Ch, Week 7328 Derwent Publications Ltd., London, GB; Class A17, AN 73-39802U XP002107901 & JP 48 022335 B (NITSUSEKI JUSHI KAGAKU CO.), 1900**
- **DATABASE WPI Section Ch, Week 8626 Derwent Publications Ltd., London, GB; Class A17, AN 86-165869 XP002107902 & JP 61 098756 A (MITSUI PETROCHEMICAL IND KK), 17 May 1986**
- **DATABASE WPI Section Ch, Week 8304 Derwent Publications Ltd., London, GB; Class A88, AN 83-08510k XP002107903 & JP 57 202336 A (SHOWA DENKO KK) , 11 December 1982**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

Field of the Invention

This invention relates to a process to improve low temperature impact performance of specific thermoplastic polymers and polymer blends. The polymers and polymer blends comprise at least one linear or substantially linear ethylene/α-olefin polymer. The substantially linear ethylene/α-olefin polymer blended with the thermoplastic has a melt flow ratio, $I_{10}/I_2$, greater than or equal to 5.63, and a molecular weight distribution, $M_w/M_n$, less than or equal to the quantity ($I_{10}/I_2$ - 4.63.) Compositions consisting essentially of polypropylene and at least one substantially linear ethylene/α-olefin polymers comprising ethylene/1-octene copolymers are especially preferred. Such compositions have surprisingly good impact performance and clarity, especially at low temperatures.

WO 93/08221 describes elastic substantially linear olefin polymers which have processability similar to highly branched low density polyethylene but the strength and toughness of linear low density polyethylene.

EP 0 141 597 describes linear ethylene copolymers with at least one $C_4$-$C_{20}$ α-olefin. These copolymers have a molecular weight distribution from 2.5 to 10 and are free from long chain branches.

Many different polymers and materials have been added to specific polymers to enhance the impact strength of the overall composition. For example, U.S. Patent 5,118,753 (Hikasa et al.) discloses thermoplastic elastomer compositions said to have low hardness and excellent flexibility and mechanical properties consisting essentially of a mixture of an oil-extended olefinic copolymer rubber and an olefinic plastic. The olefinic plastic is polypropylene or a copolymer of polypropylene and an α-olefin of 2 or more carbon atoms. Modern Plastics Encyclopedia/89 mid October 1988 Issue, Volume 65, Number 11, pp. 110-117 also discusses the use of various thermoplastic elastomers (TPEs) useful for impact modification. These include: elastomeric alloys TPEs, engineering TPEs, olefinic TPEs (also known as thermoplastic olefins or TPOs), polyurethane TPEs and styrenic TPEs.

Thermoplastic olefins (TPOs) are generally produced from blends of an elastomeric material such as ethylene/propylene rubber (EPM) or ethylene/propylene diene monomer terpolymer (EPDM) and a more rigid material such as isotactic polypropylene. Other materials or components can be added into the formulation depending upon the application, including oil, fillers, and cross-linking agents. Generally, TPOs are characterized by a balance of stiffness (modulus) and low temperature impact, good chemical resistance and broad use temperatures. Because of features such as these, TPOs are used in many applications, including automotive facia and wire and cable operations.

Union Carbide Chemicals and Plastics Inc. announced in 1990 that they have developed a new cost effective class of polyolefins trademarked Flexomer™ Polyolefins that could replace expensive EPM or EPDM rubbers. These new polyolefins are said to have bridged the gap between rubbers and polyethylene, having moduli between the two ranges. Modulus of the rubber and of the formulation is not, however, the only criteria for evaluating a TPO formulation. Low temperature impact performance, sometimes measured by Gardner Impact at -30C also is critical to a TPO composition's performance. According to the data contained in Figure 4 of the paper "Flexomer™ Polyolefins: A Bridge Between Polyethylene and Rubbers" by M.R. Rifi, H.K. Ficker and M.A. Corwin, more of the Flexomer™ Polyolefin needs to be added into the TPO formulation in order to reach the same levels of low temperature Gardner Impact performance as the standard EPM rubber, thus somewhat negating the benefits of the lower cost EPM/EPDM replacement. For example, using the data of Figure 4 of the Rifi et al paper, about 20 percent (by weight) of the EPM in polypropylene gives a Gardner Impact of about 22 J. at -30°C, while the same amount of Flexomer™ Polyolefin gives a -30°C Gardner Impact of about 13 J.

In a paper presented on September 24, 1991 at the 1991 Specialty Polyolefins Conference (SPO '91) (pp. 43-55) in Houston, Texas, Michael P. Jeffries (Exxpol Ethylene Polymers Venture Manager of Exxon Chemical Company) also reports that Exxon's Exact™ polymers and Plastomers can be blended into polypropylene for impact modification. Exxon Chemical Company, in the Preprints of Polyolefins VII International Conference, page 45-66, February 24-27 1991, also disclose that the narrow molecular weight distribution (NMWD) resins produced by their EXXPOL™ technology have higher melt viscosity and lower melt strength than conventional Ziegler resins at the same melt index. In another recent publication, Exxon Chemical Company has also taught that NMWD polymers made using a single site catalyst create the potential for melt fracture ("New Specialty Linear Polymers (SLP) For Power Cables," by Monica Hendewerk and Lawrence Spenadel, presented at IEEE meeting in Dallas, Texas, September, 1991).

It is well known that narrow molecular weight distribution linear polymers disadvantageously have low shear sensitivity or low $I_{10}/I_2$ value, which limits the extrudability of such polymers. Additionally, such polymers possessed low melt elasticity, causing problems in melt fabrication such as film forming processes or blow molding processes (e.g., sustaining a bubble in the blown film process, or sag in the blow molding process etc.). Finally, such resins also experienced surface melt fracture properties at relatively low extrusion rates thereby processing unacceptably and causing surface irregularities in the finished product.

Thus, while the development of new lower modulus polymers such as Flexomer™ Polyolefins by Union Carbide or Exact™ polymers by Exxon has aided the TPO marketplace, there continues to be a need for other more advanced, cost-effective polymers for compounding into polypropylene which improve or maintain low temperature impact performance and modulus.

Summary of the Invention

The present invention relates to a process to improve low temperature impact performance of a thermoplastic polymer being polypropylene, characterized in that the polypropylene is compounded with at least one substantially linear ethylene/α-olefin polymer to form a thermoplastic polymer composition, wherein the substantially linear ethylene/α-olefin polymer is incorporated into the composition in an amount of 10% to 50% by weight of the composition, and wherein the polymer backbone of the substantially linear ethylene/α-olefin polymer is substituted with 0.01 to 3 long chain branches having a chain length of at least 6 carbons per 1000 carbons, as determined by using $^{13}C$ nuclear magnetic resonance spectroscopy, and which does not contain a polymer fraction with a degree of short chain branching less than or equal to 2 methyls/1000 carbons and does not contain a polymer fraction with a degree of short chain branching equal to or more than 30 methyls/1000 carbons, wherein the substantially linear ethylene/α-olefin polymer is characterized as having

a) a melt flow ratio, $I_{10}/I_2$, ≥ 5.63, as measured according to ASTM D-1238, Condition 190 °C/10 kg for $I_{10}$ and Condition 190 °C/2.16 kg for $I_2$,
b) a molecular weight distribution, $M_w/M_n$, as determined by gel permeation chromatography, defined by the equation: $M_w/M_n \leq (I_{10}/I_2) - 4.63$, and
c) a critical shear rate at onset of surface melt fracture, as determined using a gas extrusion rheometer, of at least 50 percent greater than the critical shear rate at the onset of surface melt fracture of a linear ethylene/α-olefin polymer having an absence of long chain branching and the same $I_2$ and $M_w/M_n$.

The process of the invention allows to prepare formulated compositions which have this combination of good low temperature impact performance and modulus. The compositions comprise:

A) a thermoplastic being polypropylene, and
B) at least one substantially linear ethylene/α-olefin polymer.

The substantially linear ethylene/α-olefin polymers are ethylene/α-olefin interpolymers having a short chain branching distribution index (SCBDI) greater than about 30 percent. The substantially linear polymers have a single melting point, as opposed to traditional Ziegler polymerized polymers having two or more melting points (determined using differential scanning calorimetry (DSC)).

The substantially linear ethylene/α-olefin polymers are characterized as having:

a) a melt flow ratio, $I_{10}/I_2$, ≥ 5.63,
b) a molecular weight distribution, $M_w/M_n$, defined by the equation: $M_w/M_n \leq (I_{10}/I_2) - 4.63$, and
c) a critical shear rate at onset of surface melt fracture of at least 50 percent greater than the critical shear rate at the onset of surface melt fracture of a linear olefin polymer having about the same $I_2$ and $M_w/M_n$.

The substantially linear ethylene/α-olefin polymer can also be characterized as having:

a) a melt flow ratio, $I_{10}/I_2$, ≥ 5.63,
b) a molecular weight distribution, $M_w/M_n$, defined by the equation: $M_w/M_n \leq (I_{10}/I_2) - 4.63$, and
c) a processing index (PI) less than or equal to about 70 percent of the PI of a linear olefin polymer having about the same $I_2$ and $M_w/M_n$.

The formulated compositions have good low temperature impact performance (e.g., Dynatup Energy values at -29°C (-20°F) for compositions containing about 30 percent by weight of the substantially linear olefin polymer of at least about 40 J (30 ft-lbs)) and maintain adequate modulus, relative to a linear olefin polymer added at the about the same levels and at about the same $I_2$ and $M_w/M_n$.

Brief Description of the Drawings

Figure 1 describes the relationship between $I_{10}/I_2$ and -29° C (-20°F) Dynatup Impact Strength from Example 1, Example 5 and from Comparative Example 6.

Figure 2 describes the relationship between the difference between the $I_{10}/I_2$ of polymers used in the invention and those of comparative polymers, and the difference between the -20°F Dynatup impact strength of compositions made using the polymers used in the invention and those made using the comparative polymers.

## Detailed Description of the Invention

The term "linear ethylene/α-olefin polymers" means that the olefin polymer does not have long chain branching. That is, the linear ethylene/α-olefin polymer has an absence of long chain branching, as for example the linear low density polyethylene polymers or linear high density polyethylene polymers made using uniform branching (i.e., homogeneously branched) distribution polymerization processes (e.g., USP 3,645,992 (Elston)) and are those in which the comonomer is randomly distributed within a given interpolymer molecule and wherein substantially all of the interpolymer molecules have the same ethylene/comonomer ratio within that interpolymer. The term "linear ethylene/α-olefin polymers" does not refer to high pressure branched polyethylene which is known to those skilled in the art to have numerous long chain branches. Typically, the linear ethylene/α-olefin polymer is an ethylene/α-olefin interpolymer, wherein the α-olefin is at least one $C_5$-$C_{20}$ α-olefin (e.g., 1-pentene, 4-methyl-1-pentene, 1-hexene, 1-octene and the like), preferably wherein at least one of the α-olefins is 1-octene. Most preferably, the ethylene/α-olefin interpolymer is a copolymer of ethylene and a $C_5$-$C_{20}$ α-olefin, especially an ethylene/1-octene copolymer.

The substantially linear ethylene/α-olefin interpolymers of the present invention are not in the same class as traditional linear ethylene/α-olefin polymers (e.g., heterogeneously branched linear low density polyethylene, linear high density polyethylene, or homogeneously branched linear polyethylene), nor are they in the same class as traditional highly branched low density polyethylene. The substantially linear olefin polymers useful in this invention surprisingly have excellent processability, even though they have relatively narrow molecular weight distributions. Even more surprising, the melt flow ratio ($I_{10}/I_2$) of the substantially linear olefin polymers can be varied essentially independently of the polydispersity index (i.e., molecular weight distribution ($M_w/M_n$)). This is contrasted with conventional heterogeneously branched linear polyethylene resins having rheological properties such that as the polydispersity index increases, the $I_{10}/I_2$ value also increases.

The term "substantially linear" ethylene/α-olefin polymers means that the polymer backbone is substituted with about 0.01 long chain branches/1000 carbons to about 3 long chain branches/1000 carbons, more preferably from about 0.01 long chain branches/1000 carbons to about 1 long chain branches/1000 carbons, and especially from about 0.05 long chain branches/1000 carbons to about 1 long chain branches/1000 carbons.

The substantially linear ethylene/a-olefin polymers and interpolymers of the present invention are herein defined as in copending application serial number 07/776,130 (U.S. Patent No. 5,272,236) and in copending application serial number 07/939,281 filed September 2, 1992 (U.S. Patent No. 5,278,272). The substantially linear ethylene/α-olefin polymers and interpolymers useful for blending with the thermoplastics (e.g., polypropylene) are those in which the comonomer is randomly distributed within a given interpolymer molecule and wherein substantially all of the interpolymer molecules have the same ethylene/comonomer ratio within that interpolymer.

Long chain branching is defined herein as a chain length of at least about 6 carbons, above which the length cannot be distinguished using $^{13}C$ nuclear magnetic resonance spectroscopy. The long chain branch can be as long as about the same length as the length of the polymer back-bone.

Long chain branching is determined by using $^{13}C$ nuclear magnetic resonance (NMR) spectroscopy and is quantified using the method of Randall (Rev. Macromol.Chem.Phys., C29 (2&3), p. 285-297).

The substantially linear ethylene/α-olefin polymers or copolymers for use in impact modifying the selected thermoplastic or polyolefin (usually polypropylene) in the present invention are interpolymers of ethylene with at least one $C_3$-$C_{20}$ α-olefin and/or $C_4$-$C_{18}$ diolefins. Copolymers of ethylene and 1-octene are especially preferred. The term "interpolymer" is used herein to indicate a copolymer, or a terpolymer, or the like. That is, at least one other comonomer is polymerized with ethylene to make the interpolymer.

Other unsaturated monomers usefully copolymerized with ethylene include, for example, ethylenically unsaturated monomers, conjugated or nonconjugated dienes, polyenes, etc. Preferred comonomers include the $C_3$-$C_{20}$ α-olefins especially propene, isobutylene, 1-butene, 1-hexene, 4-methyl-1-pentene, and 1-octene. Other preferred monomers include styrene, halo- or alkyl substituted styrenes, tetrafluoroethylene, vinylbenzocyclobutane, 1,4-hexadiene, and naphthenics (e.g., cyclopentene, cyclohexene and cyclooctene).

The density of the substantially linear ethylene/α-olefin polymers or copolymers (as measured in accordance with ASTM D-792) for use in the present invention is generally from about 0.85 g/cm$^3$ to about 0.91 g/cm$^3$, preferably from about 0.86 g/cm$^3$ to about 0.9 g/cm$^3$, and especially from about 0.865 g/cm$^3$ to about 0.89 g/cm$^3$.

Generally, the amount of the substantially linear ethylene/α-olefin polymer incorporated into the composition is from about 1 percent to about 99 percent, by weight of the composition, preferably about 10 percent to about 50 percent, by weight of the composition, and especially from about 15 percent to about 40 percent, by weight of the composition. A blend of substantially linear ethylene polymers can be used.

The molecular weight of the substantially linear ethylene/α-olefin polymers for use in the present invention is conveniently indicated using a melt index measurement according to ASTM D-1238, Condition 190°C/2.16 kg (formerly known as "Condition (E)" and also known as $I_2$). Melt index is inversely proportional to the molecular weight of the polymer. Thus, the higher the molecular weight, the lower the melt index, although the relationship is not linear. The melt index for the substantially linear ethylene/α-olefin polymers useful herein is generally from about 0.01 grams/10 minutes (g/10 min) to about 100 g/10 min. For automotive facia applications, the melt index for the substantially linear ethylene/α-olefin polymers is generally from about 0.01 g/10 min to about 20 g/10 min, preferably from about 0.1 g/10 min to about 10 g/10 min, and especially from about 0.5 g/10 min to about 8 g/10 min. For thin walled containers (e.g., lids and cups made using an injection molding process), the melt index for the substantially linear ethylene/α-olefin polymers is generally from about 30 g/10 min to about 200 g/10 min.

Another measurement useful in characterizing the molecular weight of the substantially linear ethylene/α-olefin polymers is conveniently indicated using a melt index measurement according to ASTM D-1238, Condition 190°C/10 kg (formerly known as "Condition (N)" and also known as $I_{10}$). The ratio of the $I_{10}$ and the $I_2$ melt index terms is the melt flow ratio and is designated as $I_{10}/I_2$. For the substantially linear ethylene/α-olefin polymers used in the compositions of the invention, the $I_{10}/I_2$ ratio indicates the degree of long chain branching, i.e., the higher the $I_{10}/I_2$ ratio, the more long chain branching in the polymer. The $I_{10}/I_2$ ratio of the substantially linear ethylene/α-olefin polymers is preferably at least about 7, especially at least about 8. The $I_{10}/I_2$ ratio of the linear ethylene/α-olefin polymers is generally about 6.

Additives such as antioxidants (e.g., hindered phenolics (e.g., Irganox® 1010), phosphites (e.g., Irgafos® 168)), cling additives (e.g., PIB), antiblock additives, pigments, fillers, and the like can also be included in the TPO formulations, to the extent that they do not interfere with the enhanced formulation properties discovered by Applicants.

The "rheological processing index" (PI) is the apparent viscosity (in kpoise) of a polymer measured by a gas extrusion rheometer (GER). The gas extrusion rheometer is described by M. Shida, R.N. Shroff and L.V. Cancio in Polymer Engineering Science Vol. 17, no. 11, p. 770 (1977), and in "Rheometers for Molten Plastics" by John Dealy, published by Van Nostrand Reinhold Co. (1982) on page 97-99. All GER experiments are performed at a temperature of 190°C, at nitrogen pressures between 5250 to 500 psig using a 0.0296 inch diameter, 20:1 L/D die with an entrance angle of 180°. For the substantially linear ethylene/α-olefin polymers described herein, the PI is the apparent viscosity (in kpoise) of a material measured by GER at an apparent shear stress of $2.15 \times 10^6$ dyne/cm$^2$. The novel substantially linear ethylene/α-olefin polymers described herein preferably have a PI in the range of about 10 gm/cm sec to about 50,000 gm/cm sec (about 0.01 kpoise to about 50 kpoise), preferably about 15,000 gm/cm sec (about 15 kpoise) or less. The novel substantially linear ethylene/α-olefin polymers described herein have a PI less than or equal to about 70 percent of the PI of a comparative linear ethylene/α-olefin polymer at about the same $I_2$ and $M_w/M_n$.

An apparent shear stress vs. apparent shear rate plot is used to identify the melt fracture phenomena. According to Ramamurthy in Journal of Rheology 30(2), 337-357, 1986, above a certain critical flow rate, the observed extrudate irregularities may be broadly classified into two main types: surface melt fracture and gross melt fracture.

Surface melt fracture occurs under apparently steady flow conditions and ranges in detail from loss of specular gloss to the more severe form of "sharkskin". In this disclosure, the onset of surface melt fracture (OSMF) is characterized at the beginning of losing extrudate gloss at which the surface roughness of extrudate can only be detected by 40X magnification. The critical shear rate at onset of surface melt fracture for the substantially linear ethylene/α-olefin polymers is at least 50 percent greater than the critical shear rate at the onset of surface melt fracture of a linear ethylene/α-olefin polymer having about the same $I_2$ and $M_w/M_n$.

Gross melt fracture occurs at unsteady flow conditions and ranges in detail from regular (alternating rough and smooth, helical, etc.) to random distortions. For commercial acceptability, (e.g., in blown film products), surface defects should be minimal, if not absent. The critical shear rate at onset of surface melt fracture (OSMF) and onset of gross melt fracture (OGMF) will be used herein based on the changes of surface roughness and configurations of the extrudates extruded by a GER.

The substantially linear ethylene/α-olefin polymers useful for forming the compositions described herein have homogeneous branching distributions. That is, the polymers are those in which the comonomer is randomly distributed within a given interpolymer molecule and wherein substantially all of the interpolymer molecules have the same ethylene/comonomer ratio within that interpolymer. The homogeniety of the polymers is typically described by the SCBDI (Short Chain Branch Distribution Index) or CDBI (Composition Distribution Branch Index) and is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, Journal of Polymer Science, Poly. Phys. Ed., Vol. 20, p. 441 (1982), in U.S. Patent 4,798,081 (Hazlitt et al.), or in U.S. Patent 5,089,321 (Chum et al.). . The SCBDI or CDBI for the substantially linear olefin polymers used in the present invention is preferably greater than about 30 percent, especially greater than about 50 percent. The homogeneous ethylene/α-olefin polymers used in this invention essentially lack a measurable "high density" fraction as measured by the TREF technique (i.e., the homogeneous ethylene/α-olefin polymers do not contain a polymer fraction with a degree of branching less than or equal to 2 methyls/1000 carbons). The homogeneous ethylene/α-olefin polymers also do not contain any highly short chain branched fraction (i.e., the homogeneous ethylene/α-olefin polymers do not contain a polymer fraction with a degree of branching equal to or more than 30 methyls/1000 carbons).

Molecular Weight Distribution Determination of the Linear or Substantially Linear Ethylene/α-Olefin Polymers

The linear and substantially linear ethylene/α-olefin interpolymer product samples are analyzed by gel permeation chromatography (GPC) on a Waters 150C high temperature chromatographic unit equipped with three mixed porosity columns (Polymer Laboratories $10^3$, $10^4$, $10^5$, and $10^6$), operating at a system temperature of 140°C. The solvent is 1,2,4-trichlorobenzene, from which 0.3 percent by weight solutions of the samples are prepared for injection. The flow rate is 1.0 milliliters/minute and the injection size is 200 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968, incorporated herein by reference) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_w = R\ w_i{*}\ M_i$, where $w_i$ and $M_i$ are the weight fraction and molecular weight, respectively, of the $i^{th}$ fraction eluting from the GPC column.

For the linear and substantially linear ethylene/α-olefin polymers, the $M_w/M_n$ is preferably from about 1.5 to about 2.5.

The Substantially Linear Ethylene/α-Olefin Polymers

The substantially linear ethylene/α-olefin polymers are made by using suitable constrained geometry catalysts, preferably constrained geometry catalysts as disclosed in U.S. Application Serial Nos.: 545,403, filed July 3, 1990 (equivalent to EP-A-416,815); 758,654, filed September 12, 1991 (USP 5,132,380); 758,660, filed September 12, 1991 (abandoned); and 720,041, filed June 24, 1991 (abandoned). The monocyclopentadienyl transition metal olefin polymerization catalysts taught in USP 5,026,798, are also suitable for use in preparing the polymers of the present invention, so long as the reaction conditions are as specified below.

Suitable cocatalysts for use herein include but are not limited to, for example, polymeric or oligomeric aluminoxanes, especially methyl aluminoxane or modified methyl aluminoxane (made, e.g., as described in USP 5,041,584, USP 4,544,762, USP 5,015,749, and/or USP 5,041,585) as well as inert, compatible, noncoordinating, ion forming compounds. Preferred cocatalysts are inert, noncoordinating, boron compounds.

Preparation of the Substantially Linear Ethylene/α-Olefin Polymer

The polymerization conditions for manufacturing the substantially linear ethylene/α-olefin polymers of the present invention are generally those useful in the solution polymerization process, although the application of the present invention is not limited thereto. Slurry and gas phase polymerization processes are also believed to be useful, provided the proper catalysts and polymerization conditions are employed.

Multiple reactor polymerization processes can also be used in making the substantially linear olefin polymers and copolymers of the present invention, such as those disclosed in USP 3,914,342, incorporated herein by reference. The multiple reactors can be operated in series or in parallel, with at least one constrained geometry catalyst employed in one of the reactors.

The Thermoplastics Which Are Impact Modified

According to the invention the thermoplastic polymer which is impact modified is polypropylene.

Generally at least one polypropylene is useful in the compositions disclosed herein.

The polypropylene is generally in the isotactic form of homopolymer polypropylene, although other forms of polypropylene can also be used (e.g., syndiotactic or atactic). Polypropylene impact copolymers (e.g., those wherein a secondary copolymerization step reacting ethylene with the propylene is employed) and random copolymers (also reactor modified and usually containing 1.5-7 percent ethylene copolymerized with the propylene), however, can also be used in the TPO formulations disclosed herein. A complete discussion of various polypropylene polymers is contained in Modern Plastics Encyclopedia/89, mid October 1988 Issue, Volume 65, Number 11, pp. 86-92 .The molecular weight of the polypropylene for use in the present invention is conveniently indicated using a melt flow measurement according to ASTM D-1238, Condition 230°C/2.16 kg (formerly known as "Condition (L)" and also known as $I_2$). Melt flow rate is inversely proportional to the molecular weight of the polymer. Thus, the higher the molecular weight, the lower the melt flow rate, although the relationship is not linear. The melt flow rate for the polypropylene useful herein is generally from about 0.1 grams/10 minutes (g/10 min) to about 100 g/10 min. For impact modification of automotive facia, the melt flow rate for the polypropylene is generally from about 0.1 g/10 min to about 35 g/10 min, preferably from about 0.5 g/10 min to about 25 g/10 min, and especially from about 1 g/10 min to about 20 g/10 min. For thin walled containers (such as cups and lids made, for example, using an injection molding process), the melt flow rate for the polypropylene is generally from about 20 g/10 min to about 100 g/10 min.

The formulations are compounded by any convenient method, including dry blending the individual components and subsequently melt mixing, either directly in the extruder used to make the finished article (e.g., the automotive part), or by pre-melt mixing in a separate extruder (e.g., a Banbury mixer).

There are many types of molding operations which can be used to form useful fabricated articles or parts from the TPO formulations disclosed herein, including various injection molding processes (e.g., that described in Modern Plastics Encyclopedia/89, Mid October 1988 Issue, Volume 65, Number 11, pp. 264-268, "Introduction to Injection Molding" and on pp. 270-271, "Injection Molding Thermoplastics" and blow molding processes (e.g., that described in Modern Plastics Encyclopedia/89, Mid October 1988 Issue; Volume 65, Number 11, pp. 217-218, "Extrusion-Blow Molding") and profile extrusion. Some of the fabricated articles include automotive bumpers, facia, wheel covers and grilles, as well as other household and personal articles, including, for example, freezer containers.

Thin walled articles can also be made using injection molding processes. Generally, such thin walled articles include lids, cups and tubs and have a length over diameter ratio (L/D) greater than 250. Lids generally have a thickness less than 30 mils.

Improved Clarity of Impact Modified Compositions

Freezer containers have a unique combination of desired attributes, including good impact at low temperatures (to prevent cracking the container if dropped) and good clarity with which to see the food. The compositions disclosed herein have this unique combination of good impact and good clarity and are believed to have particular utility for this application.

Good clarity is achieved by selecting at least one linear or substantially linear ethylene/α-olefin polymer which has a refractive index within 0.005 refractive index units from the refractive index of the thermoplastic to be modified, especially within 0.002 refractive index units typically measured at 589 nm. Generally, polypropylene has a refractive index from about 1.470 to about 1.515, e.g., clarified polypropylene homopolymer has a refractive index of about 1.5065 and clarified polypropylene random copolymer has a refractive index of about 1.5044 at 589 nm.

Refractive index is measured using an Abbe-3L Refractometer made by Milton Roy Company and operated at 589 nm (sodium "d" line). Samples are prepared for testing in the refractometer by injection molding the polymer in a BOY 30T injection molder to a thickness of about 3.18 mm (0.125 inches). The samples tested for physical properties are prepared in the same manner and also at a thickness of about 3.18 mm (0.125 inches).

Haze and transmittance values for injection molded disks are determined using a HunterLab Ultrascan™ Sphere Spectrocolorimeter equipped with a Halon® lined integrating sphere which provides a maximum reflectance of light and an optical sensor with a holographic diffraction grating polychromator which achieves a spectral scan of 375 nm to 750 nm using 5 nm measurement intervals. The sample specimen is placed in the transmission compartment as close to the sphere as possible. Two measurements are made, one with a white tile (which reflects all light) at the reflectance port and one with a light trap (which reflects no light) at the reflectance port. From these measurements the total (TT) and diffuse transmittances (DT) are determined.
Percent haze = (DT/TT)(100).

Example 1 and Comparative Example 2

Example 1 is a blend containing 30 percent (by weight of the total composition) of an ethylene/1-octene substantially linear olefin polymer having a density of about 0.87 g/cm$^3$, $I_2$ of about 1.5 gms/10 minutes, $I_{10}/I_2$ of about 7.78, $M_w/M_n$ of about 2, is compounded with Himont 6323 polypropylene (melt flow rate of 12 gms/10 minutes at 230°C) on a 20 mm Welding Engineers twin screw extruder with the heating zones set according to the temperatures in Table 1:

Table 1

| Zone | Temperature (°C) |
|---|---|
| 1 (feed) | 165 |
| 2 | 175 |
| 3 | 190 |
| 4 | 195 |
| 5 | 200 |
| 6 | 200 |

The screw speed is 200 rpm and the die temperature is set at 200°C. The blend strand is cooled in a water bath and pelletized using a conventional chopper. Comparative example 2 containing 30 percent Vistalon™ 707 (an ethylene/propylene elastomer having a density of about 0.87 gm/$cm^3$ and $I_2$ of about 0.3 g/10 minutes sold commercially by Exxon Chemical Company) is compounded with the same polypropylene in a similar manner. Each compounded blend is injection molded on a Boy 30 ton injection molder set as described in Table 2:

Table 2

| | |
|---|---|
| Zone 1 | 170°C |
| Zone 2 | 180°C |
| Zone 3 | 190°C |
| Nozzle | 200°C |
| Injection pressure | 32 bars |
| Mold temperature | 50°C |
| Cycle time | 20 seconds |

The mold used produced tensile and Dynatup test specimens simultaneously. Tensile and impact properties are then determined according to ASTM procedures and the results are shown in Table 3:

Table 3

| Property | Ex. 1 | Comp. Ex. 2 | 100 percent polypropylene |
|---|---|---|---|
| Weight percent polymer added | 30 | 30 | NA |
| Yield Tensile (MPa) | 22 (3200 psi) | 18.7 (2720 psi) | 34.7 (5040 psi) |
| Break Tensile (MPa) | 16.7 (2430 psi) | 16.3 (2370 psi) | 19.6 (2840 psi) |
| Break Elongation (percent) | > 200 | >200 | 153 |
| Tensile Modulus (MPa) | 1096 (159,000 psi) | 1011 (146,700 psi) | 1687 (244,700 psi) |
| Notched Izod (J/m) | 592 (11.1 ft-lb/in) | 133 (2.5 ft-lb/in) | 5 (0.1 ft-lb/in) |
| Dynatup Energy (J, 23°C) | 39 (ductile) (28.8 ft-lb) | 38.9 (ductile) (28.7 ft-lb) | 20 (brittle) (14.8 ft-lb) |

(continued)

| Property | Ex. 1 | Comp. Ex. 2 | 100 percent polypropylene |
|---|---|---|---|
| Dynatup Energy (J, - 29°C (- 20°F)) | 56.7 (ductile) (41.8 ft-lb) | 16.8 (brittle) (12.4 ft-lb) | 0.3 (brittle) (0.2 ft-lb) |
| NA = Not Applicable | | | |

As can be seen from the data, the substantially linear ethylene/1-octene polymer imparts much greater impact resistance to polypropylene (both notched Izod and -29°C (-20°F) Dynatup) than a conventional commercial impact modifier such as the ethylene/propylene elastomer shown here. Equally important, these improved impact properties are achieved without any loss in modulus relative to the ethylene/propylene blend.

Example 3 and Comparative Example 4

Example 3 is a blend containing 30 percent (by weight of the total composition) of the same ethylene/1-octene substantially linear olefin polymer used in Example 1 compounded with a polypropylene having a melt flow rate of 20 gms/10 minutes at 230°C. Comparative Example 4 is a blend of 30 percent of a commercial ethylene-propylene diene monomer (EPDM) terpolymer elastomer sold by Uniroyal Chemical and trademarked Royalene™ 521 with the same 20 MFR polypropylene. Table 4 shows the resultant physical properties from these two blends:

Table 4

| Property | Ex. 3 | Comp. Ex. 4 |
|---|---|---|
| Weight percent polymer added | 30 | 30 |
| Yield Tensile (MPa) | 22.3 (3240 psi) | 18.3 (2650 psi) |
| Break Tensile (MPa) | 16.8 (2440 psi) | 14.6 (2120 psi) |
| Break Elongation (percent) | > 200 | > 200 |
| Tensile Modulus (MPa) | 1154 (167,400 psi) | 1004 (145,700 psi) |
| Notched Izod (J/m) | 528 (9.9 ft-lb/in) | 331 (6.2 ft-lb/in) |
| Dynatup Energy (J, 23°C) | 37.8 (ductile) (27.9 ft-lb) | 37.9 (ductile) (28.0 ft-lb) |
| Dynatup Energy (J, - 29°C (- 20°F)) | 50.2 (ductile) (37.0 ft-lb) | 40.1 (ductile/brittle) (29.6 ft-lb) |

Example 5 and Comparative Example 6

The substantially linear olefin polymers of the present invention also show enhanced impact modification relative to other linear elastomers derived from single site catalyst technology. Example 5 is a blend of 30 percent (by weight of the total composition) of an ethylene/1-octene substantially linear olefin polymer having a density of about 0.87 g/cm$^3$, $I_2$ of about 1 gms/10 minutes, $I_{10}/I_2$ of about 8.10, and $M_w/M_n$ of about 1.92 compounded with a polypropylene having a melt flow rate of 20 gms/10 minutes at 230°C. Comparative Example 6 is a blend of 30 percent of a commercial ethylene/propylene copolymer sold by Mitsui Petrochemical and trademarked Tafmer™ P-0480 ($I_2$ of 1.1 g/10 minutes, $I_{10}/I_2$ of about 6.06, $M_w/M_n$ of about 1.9, a density of about 0.87 g/cm$^3$, PI of about 27,400 gm/cm sec (about 27.4 kPoise), and a critical shear rate at OSMF of about 105 $sec^{-1}$) with the same 20 MFR polypropylene. Table 5 shows the resultant physical properties from these two blends:

Table 5

| Property | Ex. 5 | Comp. Ex. 6 |
|---|---|---|
| Weight percent polymer added | 30 | 30 |
| Yield Tensile (MPa) | 20.6 (2990 psi) | 20.1 (2920 psi) |
| Break Tensile (MPa) | 15.5 (2250 psi) | 15.3 (2220 psi) |
| Break Elongation (percent) | > 200 | > 200 |
| Tensile Modulus (MPa) | 1052 (152,600 psi) | 1044 (151,400 psi) |
| Notched Izod (J/m) | 576 (10.8 ft-lb/in) | 304 (5.7 ft-lb/in) |
| Dynatup Energy (J, 23°C) | 40.5 (ductile) (29.9 ft-lb) | 40.3 (ductile) (29.7 ft-lb) |
| Dynatup Energy (J, - 29°C (- 20°F)) | 54.9 (ductile) (40.5 ft-lb) | 39.7 (ductile/brittle) (29.3 ft-lb) |

Figure 1 describes the relationship between $I_{10}/I_2$ and -29°C (-20°F) Dynatup Impact Strength from Example 1, Example 5 and from Comparative Example 6. Compositions comprising substantially linear ethylene/α-olefin copolymers having higher $I_{10}/I_2$ values have higher -29°C (-20°F) impact strength, versus that of a comparative polymer, even though all three polymers have about the same polydispersity ($M_w/M_n$).

<u>Example 7 and Comparative Example F</u>

Example 7 is a blend of 30 percent (by weight of the total composition) of an ethylene/1-octene substantially linear olefin polymer having a density of about 0.87 g/cm$^3$, $I_2$ of about 0.5 gms/10 minutes, $I_{10}/I_2$ of about 7.14, $M_w/M_n$ of about 1.9, a PI of about 26.2 kPoise and a critical shear rate at OSMF of about 108.7 $sec^{-1}$ compounded with a polypropylene having a melt flow rate of 20 gms/10 minutes at 230°C. Comparative Example 8 is a blend of 30 percent of a commercial ethylene/ propylene copolymer sold by Mitsui Petrochemical and trademarked Tafmer™ P-0680 ($I_2$ of about 0.4 g/10 minutes, $I_{10}/I_2$ of about 6.09, $M_w/M_n$ of about 1.8, a density of about 0.87 g/cm$^3$, PI of about 56,400 gm/cm sec (about 56.4 kPoise), and a critical shear rate at OSMF of about 52.8 $sec^{-1}$) with the same 20 MFR polypropylene. Table 6 shows the resultant physical properties from these two blends:

Table 6

| Property | Ex. 7 | Comp. Ex. 8 |
|---|---|---|
| Weight percent polymer added | 30 | 30 |
| Yield Tensile (MPa) | 20.8 (3020 psi) | 20.2 (2930 psi) |
| Break Tensile (MPa) | 16.2 (2350 psi) | 15.6 (2260 psi) |
| Break Elongation | > 200 | > 200 |

(continued)

| Property | Ex. 7 | Comp. Ex. 8 |
|---|---|---|
| (percent) | | |
| Tensile Modulus (MPa) | 1042 (151,100 psi) | 1044 (151,400 psi) |
| Notched Izod (J/m) | 651 (12.2 ft-lb/in) | 448 (8.4 ft-lb/in) |
| Dynatup Energy (J, 23°C) | 43 (ductile) (31.7 ft-lb) | 41.6 (ductile) (30.7 ft-lb) |
| Dynatup Energy (J, -29°C (- 20°F)) | 62.4 (ductile) (46.0 ft-lb) | 54.9 (ductile) (40.5 ft-lb) |

Example 9 and Comparative Example 10

Example 9 is a blend of 30 percent (by weight of the total composition) of the same ethylene/ 1-octene substantially linear olefin polymer used in Example 5 compounded with a polypropylene having a melt flow rate of 12 gms/ 10 minutes at 230°C. Comparative Example 10 is a blend of 30 percent of a commercial ethylene/propylene copolymer sold by Mitsui Petrochemical and trademarked Tafmer™ P-0480 with the same 12 MFR polypropylene. Table 7 shows the resultant physical properties from these two blends:

Table 7

| Property | Ex. 9 | Comp. Ex. 10 |
|---|---|---|
| Weight percent polymer added | 30 | 30 |
| Yield Tensile (MPa) | 20.5 (2980 psi) | 20.3 (2940 psi) |
| Break Tensile (Mpa) | 15.9 (2310 psi) | 16 (2320 psi) |
| Break Elongation (percent) | > 200 | > 200 |
| Tensile Modulus (MPa) | 1023 (148,400 psi) | 1040 (150,900 psi) |
| Notched Izod (J/m) | 630 (11.8 ft-lb/in) | 165 (3.1 ft-lb/in) |
| Dynatup Energy (J, 23°C) | 44 (ductile) (32.5 ft-lb) | 34.7 (ductile) (25.6 ft-lb) |
| Dynatup Energy (J, -29°C (- 20°F)) | 64.3 (ductile) (47.4 ft-lb) | 56.5 (ductile) (41.7 ft-lb) |

Example 11 and Comparative Example 12

Example 11 is a blend of 30 percent (by weight of the total composition) of the same ethylene/1-octene substantially linear olefin polymer used in Example 7 compounded with a polypropylene having a melt flow rate of 12 gms/ 10 minutes at 230°C. Comparative Example 12 is a blend of 30 percent of a commercial ethylene/propylene copolymer sold by Mitsui Petrochemical and trademarked Tafmer™ P-0680 with the same 12 MFR polypropylene. Table 8 shows the resultant physical properties from these two blends:

Table 8

| Property | Ex.11 | Comp. Ex.12 |
|---|---|---|
| Weight percent polymer added | 30 | 30 |
| Yield Tensile (MPa) | 20.6 (2990 psi) | 20.9 (3030 psi) |
| Break Tensile (MPa) | 16.4 (2380 psi) | 16.8 (2440 psi) |
| Break Elongation (percent) | > 200 | > 200 |
| Tensile Modulus (MPa) | 1000 (145,100 psi) | 1046 (151,800 psi) |
| Notched Izod (J/m) | 710 (13.3 ft-lb/in) | 555 (10.4 ft-lb/in) |
| Dynatup Energy (J, 23°C) | 42.3 (ductile) (31.2 ft-lb) | 36.7 (ductile) (27.1 ft-lb) |
| Dynatup Energy (J, - 29°C (- 20°F)) | 68.3 (ductile) (50.4 ft-lb) | 60.7 (ductile) (44.8 ft-lb) |

Figure 2 plots the difference between the $I_{10}/I_2$ ratio versus the difference between the -29°C (-20°F) Dynatup impact strength for the following sets of experiments: Example 5 minus Comparative Example 6*; Example 7 minus Comparative Example 8*; Example 9 minus Comparative Example 10*; Example 11 minus Comparative Example 12*; Example 1 minus Comparative Example 10*; and for Example 3 - Comparative Example 6*. A general trend is observed whereby as the difference between the $I_{10}/I_2$ ratio of the polymer used in the composition increases, the difference between the -29°C (-20°F) Dynatup energy of the ultimate formulated composition also increase, thus showing that the novel compositions used herein have improved properties over the comparative formulations.

Examples 13 and 14 and Comparative Example 15

Each of Examples 13, 14 and Comparative Example 15 is a blend of 12 percent, 14 percent, 16 percent, and 18 percent (by weight of the total composition) of the selected polymer compounded with Himont polypropylene copolymer (SB751) having a melt flow rate of 35 gms/10 minutes at 230°C. The polymer used in Example 13 is an ethylene/1-octene substantially linear olefin polymer having a density of about 0.857 g/cm$^3$, and $I_2$ from about 0.9 gms/10 minutes to about 1.3 gms/10 minutes. The polymer used in Example 14 is an ethylene/1-octene substantially linear olefin polymer having a density of about 0.87 g/cm$^3$, and $I_2$ from about 0.5 gms/10 minutes to about 1 gm/10 minutes. The polymer used in Comparative Example 15 is a commercial ethylene/propylene copolymer sold by Exxon Chemical and trademarked Vistalon™ 503 having a density of about 0.86 g/cm$^3$, $I_2$ of about 0.2 gms/10 minutes and $I_{10}/I_2$ of about 15.8. Each of the samples is compounded with about 0.5 weight percent of a phenolic antioxidant and formed into 125 mil thick plaques by injection molding. Four samples are prepared for each blend and tested for low temperature Gardner drop impact, with the results averaged for each set of four samples. Table 9 shows the resultant low temperature Gardner drop impact data.

Table 9

| Ex. 13 | Gardner drop impact (m-kg) at -20 °C | Gardner drop impact (m-kg) at -30 °C | Gardner drop impact (m-kg) at -40 °C |
|---|---|---|---|
| 12 percent | 3.68 (320 inch-lbs) | 3.03 (264 inch-lbs) | NM |

(continued)

| Ex. 13 | Gardner drop impact (m-kg) at -20 °C | Gardner drop impact (m-kg) at -30 °C | Gardner drop impact (m-kg) at -40 °C |
|---|---|---|---|
| 14 percent | NM | 3.68 (320 inch-lbs) | 3.4 (296 inch-lbs) |
| 16 percent | NM | 3.68 (320 inch-lbs) | 3.68 (320 inch-lbs) |
| 18 percent | NM | 3.68 (320 inch-lbs) | 3.68 (320 inch-lbs) |
| | | | |
| Ex. 14 | | | |
| 12 percent | 3.68 (320 inch-lbs) | 3.13 (272 inch-lbs) | NM |
| 14 percent | 3.68 (320 inch-lbs) | 3.68 (320 inch-lbs) | 3.49 (304 inch-lbs) |
| 16 percent | NM | 3.68 (320 inch-lbs) | 3.68 (320 inch-lbs) |
| 18 percent | NM | 3.68 (320 inch-lbs) | 3.68 (320 inch-lbs) |
| | | | |
| Comp. Ex. 15 | | | |
| 12 percent | 3.17 (276 inch-lbs) | 2.94 (256 inch-lbs) | NM |
| 14 percent | 3.68 (320 inch-lbs) | 3.59 (312 inch-lbs) | 3.59 (312 inch-lbs) |
| 16 percent | NM | 3.68 (320 inch-lbs) | 3.4 (296 inch-lbs) |
| 18 percent | NM | 3.68 (320 inch-lbs) | 3.68 (320 inch-lbs) |
| NM = Not Measured | | | |

Examples 16 and 17 and Comparative Example 18

Examples 16 and 17 are blends containing 30 percent and 20 percent, respectively, (by weight of the total composition) of an ethylene/1-octene substantially linear olefin polymer having a density of about 0.895 g/cm$^3$, $I_2$ of about 1 gms/10 minutes, $I_{10}/I_2$ of about 8.8, $M_w/M_n$ of about 2.12, and a refractive index of about 1.502 is compounded with Amoco 8449 (copolymer polypropylene) having a melt flow rate of 12 gms/10 minutes at 230°C and a refractive index of about 1.5044, on a 20 mm Welding Engineers twin screw extruder with the heating zones set according to the temperatures in Table 10:

Table 10

| Zone | Temperature (°C) |
|---|---|
| 1 (feed) | 170 |
| 2 | 180 |
| 3 | 190 |
| 4 | 200 |

(continued)

| Zone | Temperature (°C) |
|---|---|
| 5 | 210 |
| 6 | 210 |

The screw speed is 200 rpm and the die temperature is set at 210°C. The blend strand is cooled in a water bath and pelletized using a conventional chopper. Comparative example 18 is the same polyproylene evaluated as a comparative standard. Each sample is injection molded on a Boy 30 ton injection molder set as described in Table 11:

Table 11

| | |
|---|---|
| Zone1 | 190°C |
| Zone 2 | 200°C |
| Zone 3 | 200°C |
| Nozzle | 210°C |
| Injection pressure | 24 bars |
| Mold temperature | 50°C |
| Cycle time | 20 seconds |

The mold used produced tensile and Dynatup test specimens simultaneously. Tensile and impact properties are then determined according to ASTM procedures. The results are shown in Table 12:

Table 12

| Property | Ex. 16 | Ex.17 | Comp. Ex.18 (100 percent polypropylene) |
|---|---|---|---|
| Weight percent polymer added | 30 | 20 | N A |
| Yield Tensile (MPa) | 18.5 (2690 psi) | 21 (3050 psi) | 27.2 (3950 psi) |
| Break Tensile (Mpa) | 15.2 (2210 psi) | 16.1 (2330 psi) | 17.8 (2580 psi) |
| Break Elongation (percent) | > 200 | > 200 | > 200 |
| Tensile Modulus (MPa) | 783 (113,600 psi) | 920 (133,400 psi) | 1205 (174,700 psi) |
| Flexural Strength (MPa) | 13.2 (1920 psi) | 14.7 (2130 psi) | 19.2 (2780 psi) |
| Flexural Modulus (MPa) | 527 (76,400 psi) | 636 (92,200 psi) | 776 (112,600 psi) |
| Notched Izod (J/m) | 662 (12.4 ft-lb/in) | 155 (2.9 ft-lb/in) | 69 (1.3 ft-lb/in) |
| Dynatup Energy (J, 23°C) | 46 (33.9 ft-lb) | 48.4 (35.7 ft-lb) | 54.6 (40.3 ft-lb) |
| Dynatup Energy (J, -29°C (- 20°F)) | 6.6 (brittle) (4.9 ft-lb) | 0.4 (brittle) (0.3 ft-lb) | 0.3 (brittle) (0.2 ft-lb) |
| Transmittance (percent) | 66 | 63 | 66 |

(continued)

| Property | Ex. 16 | Ex.17 | Comp. Ex.18 (100 percent polypropylene) |
|---|---|---|---|
| Haze (percent) | 74 | 73 | 67 |
| NA = Not Applicable | | | |

As the data demonstrate, adding about 30 percent (by weight of the total composition) of a substantially linear ethylene/1-octene polymer improves the impact resistance to polypropylene (both notched Izod and -29°C (-20°F) Dynatup). Since the difference between the refractive indices of the polyethylene and the polypropylene is about 0.0018 refractive index units, the improved impact properties are achieved without any loss in optical clarity relative to the polypropylene alone.

Examples 19 and 20

Example 19 is a blend containing 20 percent (by weight of the total composition) of an ethylene/1-octene substantially linear olefin polymer having a density of about 0.886 g/cm$^3$, a melt index ($I_2$) of about 1 g/10 minutes, $I_{10}/I_2$ of about 8.02, $M_w/M_n$ of about 2.02, and a refractive index of about 1.496 is compounded with Amoco 8449 (copolymer polypropylene) having a melt flow rate of about 12 gms/10 minutes at 230°C. Example 20 is a blend of 30 percent of the same ethylene/1-octene substantially linear olefin polymer with the same polypropylene. Table 13 shows the resultant physical properties from these two blends:

Table 13

| Property | Ex. 19 | Ex. 20 |
|---|---|---|
| Weight percent polymer added | 20 | 30 |
| Yield Tensile (MPa) | 21.2 (3070 psi) | 17.9 (2600 psi) |
| Break Tensile (MPa) | 16.1 (2330 psi) | 14.6 (2120 psi) |
| Break Elongation (percent) | > 200 | > 200 |
| Tensile Modulus (MPa) | 949 (137,700 psi) | 791 (114,700 psi) |
| Flexural Strength (MPa) | 14.6 (2120 psi) | 12.1 (1750 psi) |
| Flexural Modulus (MPa) | 595 (86,300 psi) | 486 (70,500 psi) |
| Notched Izod (J/m) | 454 (8.5 ft-lb/in) | 678 (12.7 ft-lb/in) |
| Dynatup Energy (J, 23°C) | 46.9 (34.6 ft-lb) | 42.6 (31.4 ft-lb) |
| Dynatup Energy (J, -29°C (- 20°F)) | 1.2 (brittle) (0.9 ft-lb) | 46.2 (ductile/brittle) (34.1 ft-lb) |
| Transmittance (percent) | 57 | 59 |
| Haze (percent) | 89 | 85 |

Since the difference between the refractive indices of the polyethylene and the polypropylene is about 0.0081 refractive index units, the improved impact properties are achieved with a slight loss in optical clarity relative to the polypropylene alone.

Examples 21 and 22

Example 21 is a blend containing 20 percent (by weight of the total composition) of an ethylene/1-octene substantially linear olefin polymer having a density of about 0.87 g/cm$^3$ a melt index ($I_2$) of about 1 g/10 minutes, $I_{10}/I_2$ of about 7.8, $M_w/M_n$ of about 2.11, and a refractive index of about 1.485 is compounded with Amoco 8449 (copolymer polypropylene) having a melt flow rate of about 12 gms/10 minutes at 230°C. Example 22 is a blend of 30 percent of the same ethylene/1-octene substantially linear olefin polymer with the same polypropylene. Table 14 shows the resultant physical properties from these two blends:

Table 14

| Property | Ex. 21 | Ex. 22 |
|---|---|---|
| Weight percent polymer added | 20 | 30 |
| Yield Tensile (MPa) | 20.3 (2950 psi) | 16.8 (2430 psi) |
| Break Tensile (MPa) | 15.6 (2260 psi) | 14 (2030 psi) |
| Break Elongation (percent) | > 200 | > 200 |
| Tensile Modulus (MPa) | 941 (136,500 psi) | 758 (109,900 psi) |
| Flexural Strength (MPa) | 14.3 (2070 psi) | 11.4 (1650 psi) |
| Flexural Modulus (MPa) | 581 (84,300 psi) | 477 (69,200 psi) |
| Notched Izod (J/m) | 550 (10.3 ft-lb/in) | 694 (13 ft-lb/in) |
| Dynatup Energy (J, 23°C) | 45.4 (33.5 ft-lb) | 39.5 (29.1 ft-lb) |
| Dynatup Energy (J, -29°C (- 20°F)) | 26.3 (brittle/ductile) (19.4 ft-lb) | 60.7 (ductile) (44.8 ft-lb) |
| Transmittance (percent) | 45 | 44 |
| Haze (percent) | 93 | 92 |

Since the difference between the refractive indices of the polyethylene and the polypropylene is about 0.0192 refractive index units, the improved impact properties are achieved, but there is greater loss in optical clarity relative to the polypropylene alone.

Examples 23 - 26 and Comparative Example 27

Examples 23 - 26 are blends containing 30 percent, 22.5 percent, 15 percent and 7.5 percent, respectively, (by weight of the total composition) of a first ethylene/1-octene substantially linear olefin polymer having a density of about 0.902 g/cm$^3$, $I_2$ of about 1 gms/10 minutes, $I_{10}/I_2$ of about 9.6, $M_w/M_n$ of about 1.91, and a refractive index of about 1.5075. Examples 24 - 26 also contain 6.5 percent, 15 percent, and 22.5 percent, respectively, of a second ethylene/1-octene substantially linear olefin polymer having a density of about 0.895 g/cm$^3$, $I_2$ of about 1 gms/10 minutes, $I_{10}/I_2$ of

about 8.8, $M_w/M_n$ of about 2.12, and a refractive index of about 1.5026. The balance of each blend is Amoco 7239 (polypropylene homopolymer) having a melt flow rate of 12 gms/10 minutes at 230°C (ASTM D 1238, Condition 230/2.16 (formerly Condition L) and a refractive index of about 1.5065. Comparative example 27 is the polypropylene homopolymer alone.

The blends are compounded in a similar manner as described previously. Tensile and impact properties are determined from the resulting compositions according to ASTM procedures. The results are shown in Table 15:

Table 15

| Property | Ex. 23 | Ex. 24 | Ex. 25 | Ex. 26 | Comp. Ex. 27 (100 percent polyprop.) |
|---|---|---|---|---|---|
| Weight percent 1st polymer added | 30 | 22.5 | 15 | 7.5 | N A |
| Weight percent 2nd polymer added | 0 | 7.5 | 15 | 22.5 | NA |
| Yield Tensile (MPa) | 29.2 (4240 psi) | 28.8 (4180 psi) | 27.7 (4020 psi) | 26.6 (3860 psi) | 40.5 (5870 psi) |
| Break Tensile (MPa) | 15.5 (2250 psi) | 18.5 (2690 psi) | 14.8 (2150 psi) | 19 (2760 psi) | 34.3 (4970 psi) |
| Break Elongation (percent) | 123 | 189 | 192 | 197 | 11 |
| Tensile Modulus (MPa) | 1566 (227,200 psi) | 1556 (225,700 psi) | 1480 (214,700 psi) | 1423 (206,400 psi) | 2158 (313,000 psi) |
| Flexural Strength (MPa) | 22.9 (3320 psi) | 24.3 (3530 psi) | 23.6 (3430 psi) | 22.8 (3310 psi) | 35 (5080 psi) |
| Flexural Modulus (MPa) | 966 (140,100 psi) | 1009 (146,400 psi) | 994 (144,100 psi) | 931 (135,000 psi) | 1507 (218,500 psi) |
| Notched Izod (J/m) | 64 (1.2 ft-lb/in) | 64 (1.2 ft-lb/in) | 75 (1.4 ft-lb/in) | 374 (7.0 ft-lb/in) | 32 (0.6 ft-lb/in) |
| Dynatup Energy (J, -18°C (0°F)) | 1.4 (1.0 ft-lb) | 1.8 (1.3 ft-lb) | 6.2 (4.6 ft-lb) | 10 (7.4 ft-lb) | 0.3 (0.2 ft-lb) |
| -18°C (0°F) Failure mode | brittle | brittle | brittle | brittle | brittle |
| Trans. (percent) | 56 | 57 | 58 | 57 | 62 |
| Haze (percent) | 81 | 82 | 79 | 85 | 69 |
| NA = Not Applicable | | | | | |

As the data demonstrate, substantially linear ethylene copolymers can be blended to yield a desired refractive index in order to more closely match that of the polypropylene. Since the difference between the refractive indices of polyethylene blend (Example 25) and the polypropylene is about 0.0015 refractive index units, the improved impact properties are achieved with only marginal loss in optical clarity relative to the polypropylene alone.

Examples 28 - 30 and Comparative Example 31

Examples 28 - 30 are blends containing 30 percent, 35 percent, and 40 percent, respectively, (by weight of the total composition) of an ethylene/1-octene substantially linear olefin polymer having a density of about 0.895 g/cm$^3$, a melt index ($I_2$) of about 1 g/10 minutes, $I_{10}/I_2$ of about 8.8, $M_w/M_n$ of about 2.12, and a refractive index of about 1.5026. The ethylene/1-octene substantially linear olefin polymer is compounded with Amoco 7239 (polypropylene homopolymer) having a melt flow rate of about 12 gms/10 minutes at 230°C. Comparative example 31 is the polypropylene alone. Table 16 shows the resultant physical properties from these two blends:

Table 16

| Property | Ex.28 | Ex. 29 | Ex. 3U | Comp. Ex. 31 |
|---|---|---|---|---|
| Weight percent polymer added | 30 | 35 | 4U | N A |
| Yield Tensile (MPa) | 26.5 (3850 psi) | 25.2 (3660 psi) | 22.8 (3300 psi) | 40.5 (5870 psi) |
| Break Tensile (MPa) | 18.8 (2730 psi) | 18.4 (2670 psi) | 17.4 (2530 psi) | 34.3 (4970 psi) |
| Break Elongation (percent) | >200 | >200 | >200 | 11 |
| Tensile Modulus (MPa) | 1432 (207,700 psi) | 1336 (193,700 psi) | 1196 (173,400 psi) | 2158 (313,000 psi) |
| Flexural Strength (MPa) | 21.9 (3170 psi) | 19.5 (2830 psi) | 16.5 (2400 psi) | 35 (5080 psi) |
| Flexural Modulus (MPa) | 936 (135,800 psi) | 832 (120,700 psi) | 687 (99,700 psi) | 1507 (218,500 psi) |
| Notched Izod (J/m) | 454 (8.5 ft-lb/in) | 577 (10.8 ft-lb/in) | 731 (13.7 ft-lb/in) | 32 (0.6 ft-lb/in) |
| Dynatup Energy (J, -18°C (0°F)) | 23.7 (17.5 ft-lb) | 47.2 (34.8 ft-lb) | 72 (53.1 ft-lb) | 0.3 (0.2 ft-lb) |
| -18°C (0°F) Failure Mode | brittle/ ductile | ductile | ductile | brittle |
| Trans. (percent) | 58 | 59 | 59 | 62 |
| Haze (percent) | 86 | 85 | 84 | 69 |
| NA = Not Applicable | | | | |

Since the difference between the refractive indices of the polyethylene and the polypropylene is about 0.0039 refractive index units, the improved impact properties are achieved with only a small loss in optical clarity, while the notched Izod and Dynatup Energy is increased significantly, relative to the polypropylene alone.

Examples 32 and 33

Example 32 is a blend containing 70 percent (by weight of the final composition) of a polypropylene homopolymer (melt flow rate of about 12 g/10 minutes at 230°C) and 30 percent (by weight of the final composition) of a substantially linear ethylene/ 1-octene copolymer (melt index of about 3 g/10 minutes at 190°C, density of about 0.87 g/cm$^3$, $I_{10}/I_2$ of about 7.6 and $M_w/M_n$ of about 1.95). The blend is compounded, injection molded and tested for physical properties.

Example 33 is a blend containing 70 percent (by weight of the final composition) of a polypropylene homopolymer (melt flow rate of about 12 g/10 minutes at 230°C), 17 percent (by weight of the final composition) of a first substantially linear ethylene/1-octene copolymer (melt index of about 7 g/10 minutes at 190°C, density of about 0.87 g/cm$^3$, $I_{10}/I_2$ of about 7.7 and $M_w/M_n$ of about 1.92) and 13 percent (by weight of the final composition) of a second substantially linear ethylene/1-octene copolymer (melt index of about 1 g/10 minutes at 190°C, density of about 0.87 g/cm$^3$, $I_{10}/I_2$ of about 7.8 and $M_w/M_n$ of about 2.11). This combination of substantially linear ethylene/1-octene copolymers yields a net melt index of about 3 g/l) minutes (calculated according to the following equation: log (melt index)blend = (0.567)(log 7) + (0.433)(log 1)). This blend is also compounded, injection molded and tested for physical properties. Table 17 summaries the physical properties results:

Table 17

| Property | Ex. 32 | Ex. 33 |
|---|---|---|
| Yield Tensile (MPa) | 21.2 (3080 psi) | 19.7 (2850 psi) |
| Break Tensile (MPa) | 15.8 (2290 psi) | 14.3 (2080 psi) |
| Tensile Modulus (MPa) | 1031 (149,600 psi) | 1053 (152,700 psi) |
| Notched Izod (J/m) | 363 (6.8 ft-lb/in) | 486 (9.1 ft-lb/in) |
| Dynatup Energy (J, -29°C (-20°F)) | 2.6 (1.9 ft-lb) | 62.6 (46.2 ft-lb) |
| -29°C (-20°F) Failure Mode | brittle | ductile |

As the data demonstrate, a blend of substantially linear ethylene polymers improves the -29°C (-20°F) Dynatup Energy value by 60 J (over 40 ft-lbs) and improves the notched Izod of the composition by over 100 J/m (over 2 ft-lb/in.), even though the net melt index of the combination of substantially linear ethylene/1-octene copolymers is about the same as that of a single substantially linear ethylene polymer.

## Claims

**1.** A process to improve low temperature impact performance of a thermoplastic polymer being polypropylene, **characterized in that** the polypropylene is compounded with at least one substantially linear ethylene/α-olefin polymer to form a thermoplastic polymer composition, wherein the substantially linear ethylene/α-olefin polymer is incorporated into the composition in an amount of 10% to 50% by weight of the composition, and wherein the polymer backbone of the substantially linear ethylene/α-olefin polymer is substituted with 0.01 to 3 long chain branches having a chain length of at least 6 carbons per 1000 carbons, as determined by using $^{13}$C nuclear magnetic resonance spectroscopy, and which does not contain a polymer fraction with a degree of short chain branching less than or equal to 2 methyls/1000 carbons and does not contain a polymer fraction with a degree of short chain branching equal to or more than 30 methyls/1000 carbons, wherein the substantially linear ethylene/α-olefin polymer is **characterized** as having

a) a melt flow ratio, $I_{10}/I_2$, ≥ 5.63, as measured according to ASTM D-1238, Condition 190 °C/10 kg for $I_{10}$ and Condition 190 °C/2.16 kg for $I_2$,
b) a molecular weight distribution, $M_w/M_n$, as determined by gel permeation chromatography, defined by the equation: $M_w/M_n \leq (I_{10}/I_2) - 4.63$, and
c) a critical shear rate at onset of surface melt fracture, as determined using a gas extrusion rheometer, of at least 50 percent greater than the critical shear rate at the onset of surface melt fracture of a linear ethylene/α-olefin polymer having an absence of long chain branching and the same $I_2$ and $M_w/M_n$.

**2.** A process to improve low temperature impact performance of a thermoplastic polymer being polypropylene according to claim 1,
wherein the substantially linear ethylene/α-olefin polymer is further

**characterized** as having:

d) a processing index (PI), as measured by a gas extrusion rheometer, less than or equal to 70 percent of the PI of a linear ethylene/ α-olefin polymer having an absence of long chain branching and the same $I_2$ and $M_w/M_n$.

**3.** A process to improve low temperature impact performance of a thermoplastic polymer being polypropylene according to claim 1 or 2,
wherein the substantially linear ethylene/α-olefin polymer is further **characterized** as having:

e) a molecular weight distribution, $M_w/M_n$, as determined by gel permeation chromatography, from 1.5 to 2.5.

**4.** A process according to any of the preceding claims, wherein the substantially linear ethylene/α-olefin polymer is incorporated into the composition in an amount of from 15% to 40% by weight of the composition.

**5.** The process of any of the preceding claims, wherein the individual components are dry blended and subsequently melt mixed.

**6.** The process of claim 5, wherein the melt mixing is performed in an extruder.

**7.** The process of any of the preceding claims, wherein the $I_{10}/I_2$ of the substantially linear ethylene/α-olefin polymer used is at least 7.

**8.** The process of any of the preceding claims wherein the $I_{10}/I_2$ of the substantially linear ethylene/α-olefin polymer used is at least 8.

**9.** The process of any of the preceding claims, wherein the substantially linear ethylene/α-olefin polymer used is a copolymer of ethylene and at least one $C_3$-$C_{20}$ α-olefin.

**10.** The process of any of the preceding claims, wherein the substantially linear ethylene/α-olefin polymer used is a copolymer of ethylene and at least one $C_4$-$C_{20}$ α-olefin.

**11.** The process of any of the preceding claims, wherein the substantially linear ethylene/α-olefin polymer used is a copolymer of ethylene and at least one $C_8$-$C_{20}$ α-olefin.

**12.** The process of any of the preceding claims, wherein the substantially linear ethylene/α-olefin polymer used is a copolymer of ethylene and 1-octene.

**13.** The process of any of the preceding claims, wherein the polyolefin used is polypropylene and wherein the substantially linear ethylene/α-olefin polymer used is further **characterized** as having a refractive index within 0.005 refractive index units of the refractive index of the polypropylene as measured at 589 nm.

**14.** The process of any of the preceding claims, wherein a blend of substantially linear ethylene polymers is used.

## Patentansprüche

**1.** Verfahren, um das Niedrigtemperatur-Schlagzähigkeitsverhalten eines thermoplastischen Polymers, das Polypropylen ist, zu verbessern, **dadurch gekennzeichnet, dass** das Popypropylen mit mindestens einem im Wesentlichen linearen Ethylen-/α-Olefin-Polymer vermischt ist, um eine thermoplastische Polymer-Zusammensetzung zu bilden, wobei das im Wesentlichen lineare Ethylen-/α-Olefin-Polymer in die Zusammensetzung in einer Menge von 10 Gewichts-% bis 50 Gewichts-% der Zusammensetzung eingebaut wird und wobei das Polymer-Rückgrat des im Wesentlichen linearen Ethylen-/α-Olefin-Polymers mit 0,01 bis 3 langkettigen Verzweigungen substituiert ist, die eine Kettenlänge von mindestens 6 Kohlenstoffatomen pro 1000 Kohlenstoffatomen haben, wie mittels $^{13}C$-Kernmagnetresonanz-Spektroskopie feststellbar, und das keine Polymerfraktion mit einem Grad an kurzkettigen Verzweigungen von weniger als oder gleich 2 Methylgruppen/1000 Kohlenstoffatome enthält und das keine Polymerfraktion mit einem Grad an kurzkettigen Verzweigungen von 30 oder mehr Methylgruppen/1000 Kohlenstoffatome enthält, wobei das im Wesentlichen lineare Ethylen-/α-Olefin-Polymer **dadurch gekennzeichnet ist, dass** es

a) ein Schmelzflussverhältnis von $I_{10}/I_2 \geq 5{,}63$ hat, gemessen gemäß ASTM D-1238, Bedingung 190°C/10 kg für $I_{10}$ und Bedingung 190°C/2,16 kg für $I_2$,
b) eine Molekulargewichtsverteilung $M_w/M_n$ hat, bestimmt durch Gel-Permeations-Chromatographie, definiert durch die Gleichung: $M_w/M_n \leq (I_{10}/I_2) - 4{,}63$ und
c) eine kritische Scherrate am Beginn des Oberflächen-Schmelzbruches hat, bestimmt unter Verwendung eines Gas-Extrusions-Rheometers, die mindestens 50 Prozent größer ist als die kritische Scherrate am Beginn des Oberflächen-Schmelzbruches eines linearen Ethylen-/α-Olefin-Polymers, das keine langkettigen Verzweigungen und den gleichen $I_2$ und $M_w/M_n$ hat.

2. Verfahren nach Anspruch 1, um das Niedrigtemperatur-Schlagzähigkeitsverhalten eines thermoplastischen Polymers, das Polypropylen ist, zu verbessern, wobei das im Wesentlichen lineare Ethylen-/α-Olefin-Polymer ferner **dadurch gekennzeichnet ist, dass** es d) einen Verarbeitungsindex (PI) hat, gemessen mittels eines Gas-Extrusions-Rheometers, von weniger oder gleich 70 Prozent des PI eines linearen Ethylen-/α-Olefin-Polymers ohne langkettige Verzweigungen und mit dem gleichen $I_2$ und $M_w/M_n$.

3. Verfahren nach Anspruch 1 oder 2, um das Niedrigtemperatur-Schlagzähigkeitsverhalten eines thermoplastischen Polymers, das Polypropylen ist, zu verbessern, wobei das im Wesentlichen lineare Ethylen-/α-Olefin-Polymer ferner **dadurch gekennzeichnet ist, dass** es e) eine Molekulargewichtsverteilung $M_w/M_n$, bestimmt durch Gel-Permeations-Chromatographie, von 1,5 bis 2,5 hat.

4. Verfahren nach einem der vorhergehenden Ansprüche, wobei das im Wesentlichen lineare Ethylen-/α-Olefin-Polymer in die Zusammensetzung in einer Menge von 15 Gewichts-% bis 40 Gewichts-% der Zusammensetzung eingebaut wird.

5. Verfahren nach einem der vorhergehenden Ansprüche, wobei die einzelnen Bestandteile trocken gemischt und anschließend geschmolzen vermischt werden.

6. Verfahren nach Anspruch 5, wobei das Schmelzmischen in einem Extruder durchgeführt wird.

7. Verfahren nach einem der vorhergehenden Ansprüche, wobei der $I_{10}/I_2$ des verwendeten im Wesentlichen linearen Ethylen-/α-Olefin-Polymers mindestens 7 ist.

8. Verfahren nach einem der vorhergehenden Ansprüche, wobei der $I_{10}/I_2$ des verwendeten im Wesentlichen linearen Ethylen-/α-Olefin-Polymers mindestens 8 ist.

9. Verfahren nach einem der vorhergehenden Ansprüche, wobei das verwendete im Wesentlichen lineare Ethylen-/α-Olefin-Polymer ein Copolymer aus Ethylen und mindestens einem $C_3$-$C_{20}$-α-Olefin ist.

10. Verfahren nach einem der vorhergehenden Ansprüche, wobei das verwendete im Wesentlichen lineare Ethylen-/α-Olefin-Polymer ein Copolymer aus Ethylen und mindestens einem $C_4$-$C_{20}$-α-Olefin ist.

11. Verfahren nach einem der vorhergehenden Ansprüche, wobei das verwendete im Wesentlichen lineare Ethylen-/α-Olefin-Polymer ein Copolymer aus Ethylen und mindestens einem $C_8$-$C_{20}$-α-Olefin ist.

12. Verfahren nach einem der vorhergehenden Ansprüche, wobei das verwendete im Wesentlichen lineare Ethylen-/α-Olefin-Polymer ein Copolymer aus Ethylen und 1-Octen ist.

13. Verfahren nach einem der vorhergehenden Ansprüche, wobei das verwendete Polyolefin Polypropylen ist und wobei das im Wesentlichen lineare Ethylen-/α-Olefin-Polymer ferner **dadurch gekennzeichnet ist, dass** es einen Brechungsindex hat, der innerhalb von 0,005 Brechungsindexeinheiten des bei 589 nm gemessenen Brechungsindex von Polypropylen ist.

14. Verfahren nach einem der vorhergehenden Ansprüche, wobei eine Mischung aus im Wesentlichen linearen Ethylen-Polymeren verwendet wird.

**Revendications**

1. Procédé pour améliorer la résistance aux chocs à basse température d'un polymère thermoplastique qui est du polypropylène,
**caractérisé en ce que** le polypropylène est composé avec au moins un polymère éthylène/α-oléfine sensiblement linéaire pour former une composition polymère thermoplastique, dans lequel le polymère éthylène/α-oléfine sensiblement linéaire est incorporé dans la composition en une quantité de 10 % à 50 % en poids de la composition, et dans lequel le squelette polymère du polymère éthylène/α-oléfine sensiblement linéaire est substitué par 0,01 à 3 ramifications à chaîne longue ayant une longueur de chaîne d'au moins 6 carbones pour 1000 carbones, comme déterminée par spectroscopie de résonance magnétique nucléaire de $C^{13}$, et qui ne contient pas de fraction polymère ayant un degré de ramification à chaîne courte inférieur ou égal à 2 méthyles/1000 carbones et ne contient pas de fraction polymère ayant un degré de ramification à chaîne courte supérieur ou égal à 30 méthyles/1000 carbones, dans lequel le polymère éthylène/α-oléfine sensiblement linéaire est **caractérisé en ce qu'**il possède :

   a) un indice de fluidité, $I_{10}/I_2$, ≥ 5,63, mesuré selon la norme ASTM D-1238, Etat 190°C/10 kg pour $I_{10}$ et Etat 190°C/2,16 kg pour $I_2$,
   b) une distribution du poids moléculaire, $M_m/M_n$, comme déterminée par chromatographie par perméation de gel, définie par l'équation : $M_m/M_n \leq (I_{10}/I_2) - 4{,}63$, et
   c) une vitesse de cisaillement critique à l'apparition d'une marque de coulée en surface, comme déterminée à l'aide d'un rhéomètre d'extrusion au gaz, supérieure d'au moins 50 % à la vitesse de cisaillement critique à l'apparition de la marque de coulée en surface d'un polymère éthylène/α-oléfine linéaire dépourvu de ramification à chaîne longue et ayant les mêmes $I_2$ et $M_m/M_n$.

2. Procédé pour améliorer la résistance aux chocs à basse température d'un polymère thermoplastique qui est du polypropylène selon la revendication 1, dans lequel le polymère éthylène/α-oléfine sensiblement linéaire est en outre **caractérisé en ce qu'**il possède :

   d) un indice de transformation (PI), mesuré à l'aide d'un rhéomètre d'extrusion au gaz, inférieur ou égal à 70 % du PI d'un polymère éthylène/α-oléfine linéaire dépourvu de ramification à chaîne longue et ayant les mêmes $I_2$ et $M_m/M_n$.

3. Procédé pour améliorer la résistance aux chocs à basse température d'un polymère thermoplastique qui est du polypropylène, selon la revendication 1 ou 2, dans lequel le polymère éthylène/α-oléfine sensiblement linéaire est en outre **caractérisé en ce qu'**il possède :

   e) une distribution du poids moléculaire, $M_m/M_n$, comme déterminée par chromatographie par perméation de gel, de 1,5 à 2,5.

4. Procédé selon l'une quelconque des revendications précédentes, dans lequel le polymère éthylène/α-oléfine sensiblement linéaire est incorporé dans la composition en une quantité de 15 % à 40 % en poids de la composition.

5. Procédé selon l'une quelconque des revendications précédentes, dans lequel les composants individuels sont mélangés à sec puis mélangés à chaud.

6. Procédé selon la revendication 5, dans lequel le mélange à chaud est effectué dans une extrudeuse.

7. Procédé selon l'une quelconque des revendications précédentes, dans lequel l'indice $I_{10}/I_2$ du polymère éthylène/α-oléfine sensiblement linéaire utilisé est d'au moins 7.

8. Procédé selon l'une quelconque des revendications précédentes, dans lequel l'indice $I_{10}/I_2$ du polymère éthylène/α-oléfine sensiblement linéaire est d'au moins 8.

9. Procédé selon l'une quelconque des revendications précédentes, dans lequel le polymère éthylène/α-oléfine sensiblement linéaire utilisé est un copolymère d'éthylène et d'au moins une α-oléfine en $C_3$ à $C_2$o .

10. Procédé selon l'une quelconque des revendications précédentes, dans lequel le polymère éthylène/α-oléfine sensiblement linéaire utilisé est un copolymère d'éthylène et d'au moins une α-oléfine en $C_4$ à $C_{20}$.

**11.** Procédé selon l'une quelconque des revendications précédentes, dans lequel le polymère éthylène/α-oléfine sensiblement linéaire utilisé est un copolymère d'éthylène et d'au moins une α-oléfine en $C_5$ à $C_{20}$.

**12.** Procédé selon l'une quelconque des revendications précédentes, dans lequel le polymère éthylène/α-oléfine sensiblement linéaire utilisé est un copolymère d'éthylène et de 1-octène.

**13.** Procédé selon l'une quelconque des revendications précédentes, dans lequel la polyoléfine utilisée est du polypropylène et dans lequel le polymère éthylène/α-oléfine sensiblement linéaire utilisé est en outre **caractérisé en ce qu'**il possède un indice de réfraction pas éloigné de plus de 0,005 unités d'indice de réfraction de l'indice de réfraction du polypropylène mesuré à 589 nm.

**14.** Procédé selon l'une quelconque des revendications précédentes, dans lequel un mélange de polymères d'éthylène sensiblement linéaires est utilisé.

FIG.1

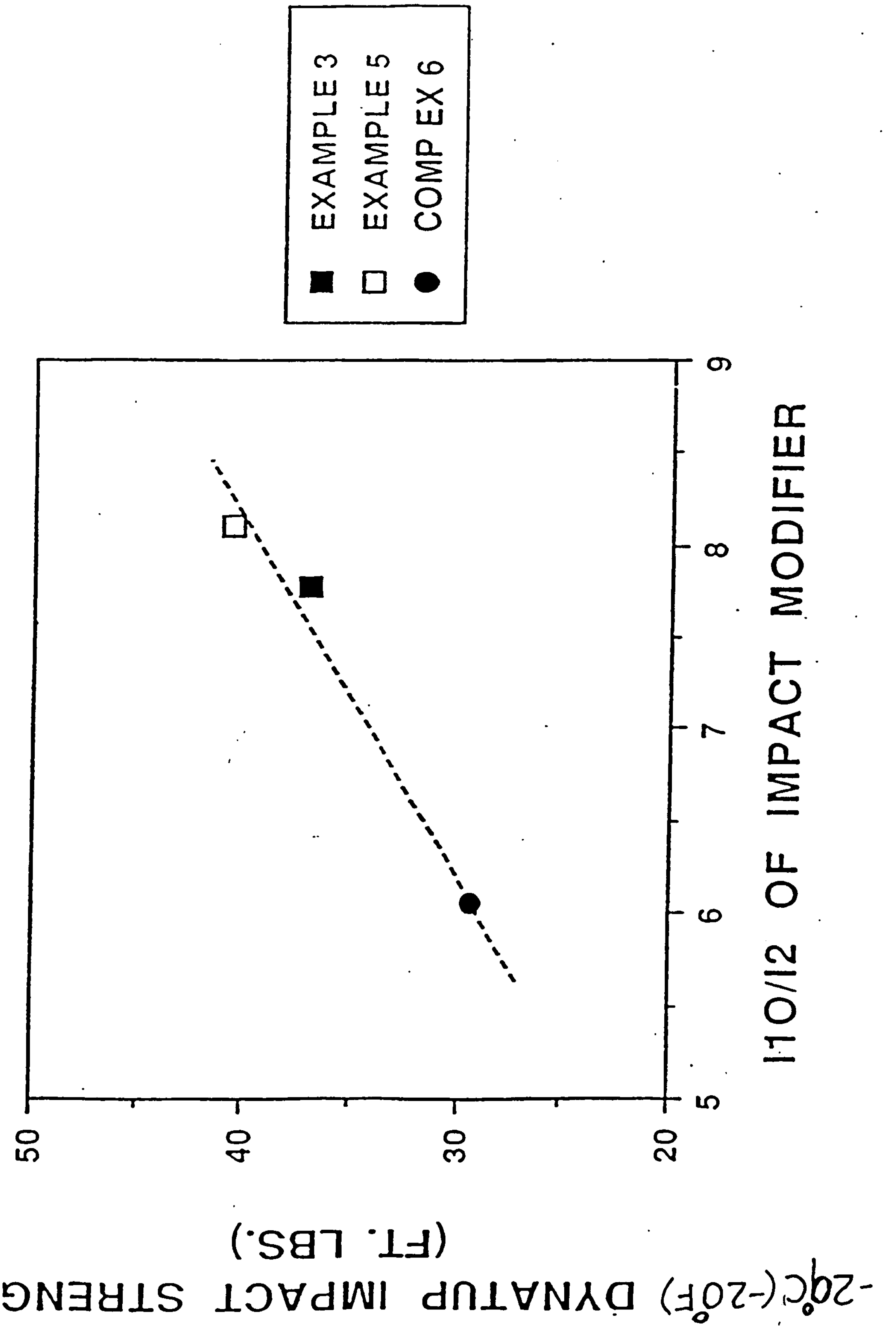
EXAMPLE 3
EXAMPLE 5
COMP EX 6
50
40
30
20
5
6
7
8
9
I10/I2 OF IMPACT MODIFIER
-29°C (-20°F) DYNATUP IMPACT STRENGTH
(FT. LBS.)

FIG.2

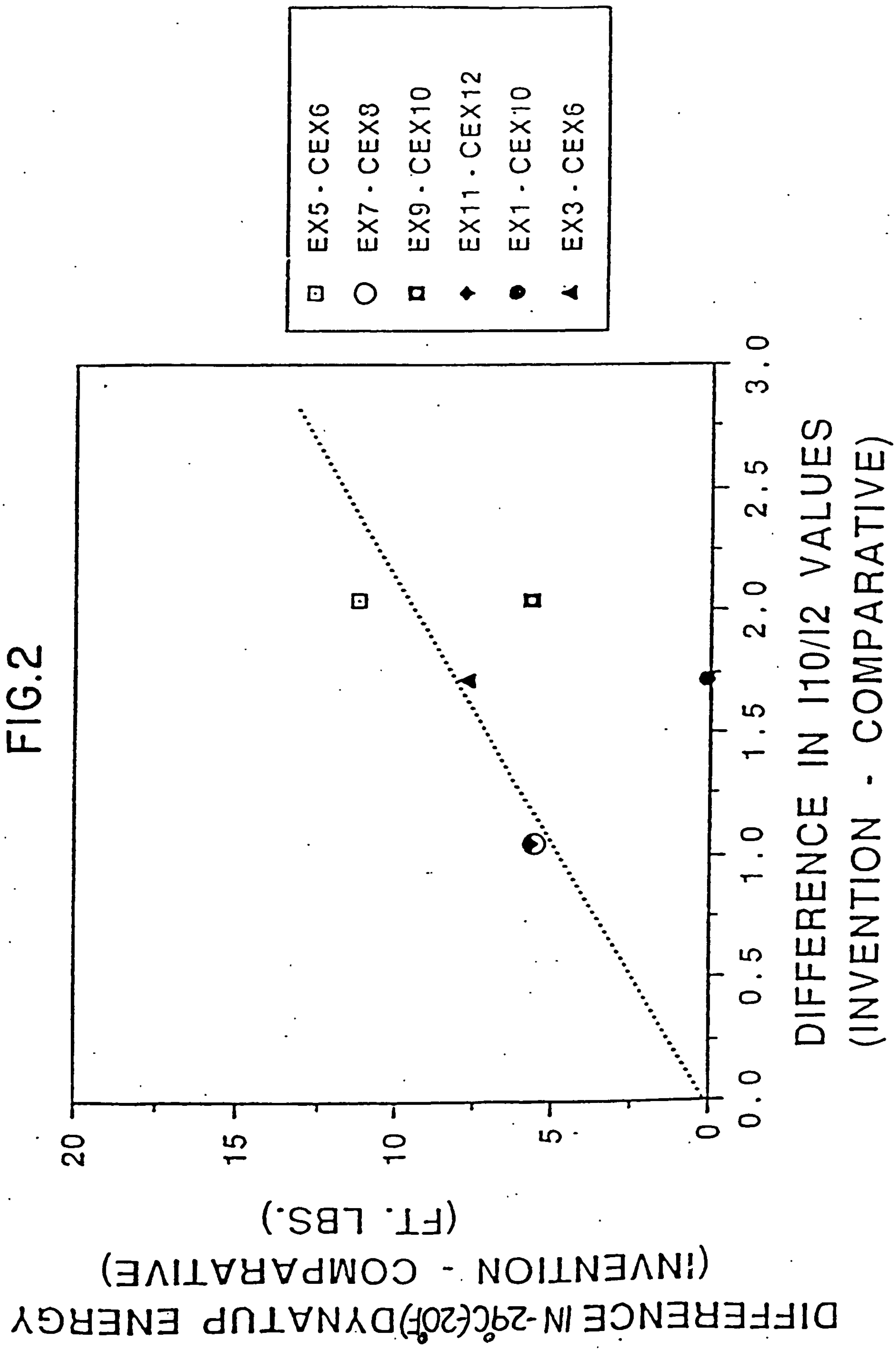
EX5 - CEX6
EX7 - CEX3
EX9 - CEX10
EX11 - CEX12
EX1 - CEX10
EX3 - CEX6
0.0
0.5
1.0
1.5
2.0
2.5
3.0
DIFFERENCE IN I10/I2 VALUES
(INVENTION - COMPARATIVE)
0
5
10
15
20
DIFFERENCE IN -29°C(-20°F) DYNATUP ENERGY
(INVENTION - COMPARATIVE)
(FT. LBS.)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 9308221 A
- EP 0141597 A
- US 5118753 A
- US P3645992 A, Elston
- US 07776130 B
- US 5272236 A
- US 07939281 B
- US 5278272 A
- US 4798081 A, Hazlitt
- US 5089321 A, Chum
- US 545403 A
- EP 416815 A
- WO 758654 A
- US P5132380 A
- US 758660 A
- US 720041 A
- US P5026798 A
- US P5041584 A
- US P4544762 A
- US P5015749 A
- US P5041585 A
- US P3914342 A


### Non-patent literature cited in the description


- Modern Plastics Encyclopedia/89 mid. 1988, vol. 65, 110-117
- **MONICA HENDEWERK ; LAWRENCE SPENADEL.** New Specialty Linear Polymers (SLP) For Power Cables. *IEEE meeting in Dallas,* September 1991
- **RANDALL.** *Rev. Macromol.Chem.Phys,* vol. C29 (2-3), 285-297
- **M. SHIDA ; R.N. SHROFF ; L.V. CANCIO.** *Polymer Engineering Science,* 1977, vol. 17 (11), 770
- **JOHN DEALY.** Rheometers for Molten Plastics. Van Nostrand Reinhold Co, 1982, 97-99
- **RAMAMURTHY.** *Journal of Rheology,* 1986, vol. 30 (2), 337-357
- **WILD et al.** *Journal of Polymer Science, Poly. Phys. Ed,* 1982, vol. 20, 441
- **WILLIAMS ; WORD.** *Journal of Polymer Science, Polymer Letters,* 1968, vol. 6 (621
- *Modern Plastics Encyclopedia/89,* October 1988, vol. 65 (11), 86-92
- *Modern Plastics Encyclopedia/89,* October 1988, vol. 65 (11), 264-268
- *Modern Plastics Encyclopedia/89,* October 1988, vol. 65 (11), 217-218